# EUROPEAN PATENT APPLICATION

(11) **EP 0 681 954 A2**
(43) Date of publication of application: **15.11.1995**
(21) Application number: 95103184.8
(22) Date of filing: 06.03.1995
(51) Int. Cl.: B60T 8/42

(54) **Modulator for use in antilock system**

(30) Priority: 10.05.1994 JP 96580/94
(71) Applicant: Sumitomo Electric Industries, Ltd., Osaka 541 (JP)
(72) Inventor: Kohno, Teruhisa, c/o Itami Works of Sumitomo, Itami-shi, Hyogo (JP)
(74) Representative: Eder, Thomas, Dr.-Ing.

(57) **Abstract**

A modulator for reincreasing brake pressure during antilock control which is small in size, simple in structure and low in cost, and which can prevent kickbacks to the brake peal (2) and the transmission of pump pulsation to the brake pedal (2). This modulator has a flow restriction valve (9) adapted to check fluid flow from a pump (10) toward a master cylinder (1) if the discharge pressure of the pump (10) becomes higher by a predetermined value than the fluid pressure in a wheel brake (3). It further includes a piston (20) adapted to hold the valve body (12a) of the pump discharge valve (12) or the valve body (11a) of the pump intake valve (11) in the open position if the pump discharge pressure exceeds the master cylinder pressure (or the wheel brake pressure) by a predetermined value. With this arrangement, while there is no need to supply brake fluid from the pump (10), or if an excessive brake fluid is supplied from the pump (10), the pump (10) automatically stops discharging brake fluid. This prevents the kickback and reduces the amount of electric power consumed by the pump driving motor.

## Description

The present invention relates to a modulator for use in a circulation type antilock system, the modulator having a pump as a fluid pressure source for reincreasing the brake fluid pressure.

In a circulation type antilock system, the brake fluid discharged from a wheel brake to reduce the brake pressure during antilock control is sucked by a pump and returned to a main fluid line connecting the master cylinder to the wheel brake. The fluid returned to the main fluid line is used to reincrease the pressure during antilock control.

This type of antilock system is simple in structure and thus can be manufactured at low cost. But this system has some problems. Namely, when reducing the brake pressure during antilock control, the main fluid line is closed by a solenoid valve at a point downstream of the point at which the fluid from the pump is returned to the main fluid line (i.e. the point nearer to the wheel brake). If the amount of fluid discharged from the pump is greater than the amount of fluid sucked by the pump or the amount of fluid necessary to reincrease the brake pressure during antilock control, an excess brake fluid flows back into the master cylinder, thus pushing back the brake pedal (so-called kickback). Also, the pump pulsation tends to be felt by the driver through the brake pedal.

Devices designed to improve brake pedal feelings are proposed in 1) Examined Japanese Patent Publication 61-16656, 2) Examined Japanese patent Publication 61-54619, and 3) Unexamined Japanese patent Publication 63-154456.

The device disclosed in publication 1) has a special check valve which allows fluid flow from the master cylinder toward the wheel brake only if the output pressure of the master cylinder (hereinafter referred to as "master cylinder pressure") has exceeded a predetermined value and checks the fluid flow in the opposite direction (such a valve is called "F-valve"), and a pressure accumulator. The fluid discharged from the pump, which is prevented from flowing toward the master cylinder by the check valve, is stored in the accumulator. Thus, pedal kickbacks and transmission of pump pulsation to the brake pedal are eliminated. But since this device includes a pressure accumulator, it tends to be bulky and costly. Also, since the fluid discharge pressure is rather high, the durability of the pump tends to be low. Moreover, the driving motor consumes much power because the pump is driven under high load.

The device disclosed in publication 2) includes a check valve which checks fluid flow from the pump toward the master cylinder, and a pressure adjusting valve adapted to open a relief passage if the pump discharge pressure becomes higher by a predetermined value than the master cylinder pressure. Thus, the fluid discharged from the pump can flow back into the pump inlet side through the relief passage. One problem of this device is that it is complicated and expensive since it needs a pressure adjusting valve. Another problem is that the motor tends to consume much electric power because of rather high relief pressure.

The device disclosed in publication 3) has a check valve (F-valve) which exhibits flow check function when the wheel brake pressure is higher by a predetermined value than the master cylinder pressure, and a regulator valve adapted to open when the pump discharge pressure becomes higher by a predetermined value than the wheel brake pressure to unload the fluid discharged from the pump into the pump inlet side through the regulator valve. This device, too, is rather complicated in structure and expensive. Moreover, since the fluid is unloaded at high pressure, much electric power is wasted.

An object of the present invention is to provide a modulator for use in a circulation type antilock system which is free from these problems.

In order to achieve this object, the antilock modulator for use in an antilock system, comprising a pump having an intake valve and a discharge valve for sucking up brake fluid discharged from a wheel brake during antilock control, and returning the brake fluid into a main fluid line connecting a master cylinder to the wheel brake, a flow restriction means for restricting fluid flow from the pump toward the master cylinder at least during antilock control, a pressure comparison means for comparing the output pressure of the master cylinder or the pressure of the wheel brake as a comparison pressure with the discharge pressure of the pump, the pressure comparison means being adapted to be activated if the pump discharge pressure becomes higher by a predetermined value than the comparison pressure, and a pump discharge stop means for stopping the pump from discharging fluid by moving one of valve bodies of the intake valve and the discharge valve to an open position and holding it therein when the pressure comparison means is activated.

As the flow restriction valve, it is preferable to use such a means as an F-valve because it requires no electromagnetic driving means.

It is possible to further simplify the entire structure of the device and reduce the cost by using a single piston which has the functions of both the pressure comparison means and the pump discharge stop means and adapted to be acted on by the pump discharge pressure and the comparison pressure from opposite directions.

More detailed description of this piston is made in the following "Embodiment" section.

According to the present invention, while the brake pressure is being reduced during antilock control, at which time there is no need to supply brake fluid from the pump, or if an excessive amount of fluid is supplied from the pump while reincreasing the brake pressure, the valve body of the intake valve or discharge valve is moved to an open position and maintained in this position. Since the pump cannot compress brake pressure in this state, no brake fluid is discharged from the pump.

Since the pump is disabled while not needed, there is no need to provide a pressure accumulator, a pressure adjusting valve as a relief valve, or a regulator valve for unloading brake fluid, which will inevitably complicate the entire device and increase its size and manufacturing cost.

While the pump is not discharging fluid, the pump driving motor is rotating under no load, so that there is little waste of electric power.

Other features and objects of the present invention will become apparent from the following description made with reference to the accompanying drawings, in which:
Fig. 1 is a schematic view of one embodiment of the modulator according to the present invention;
Fig. 2 is a schematic view of another embodiment; and
Fig. 3 is a schematic view of still another embodiment.

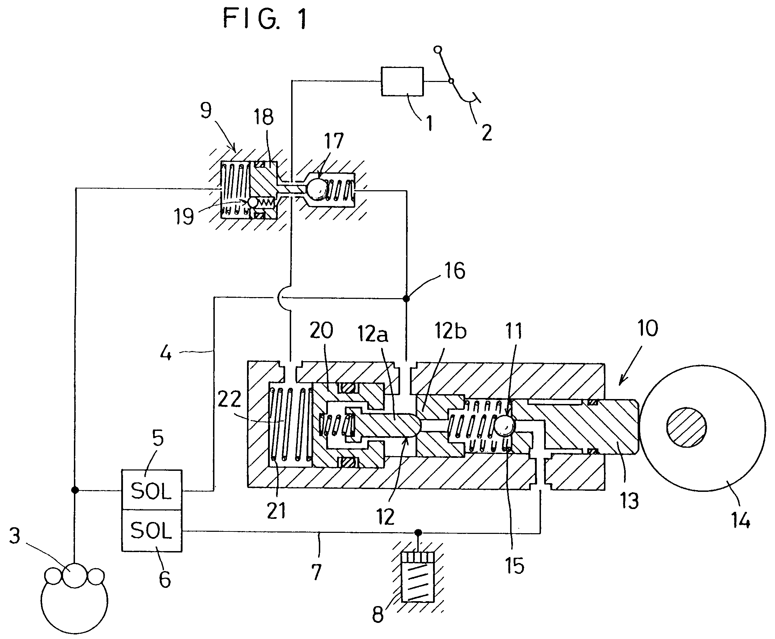

The brake system shown in Figs. 1-3 comprises the following components: a master cylinder 1; a brake pedal 2; a wheel brake 3; a main fluid line 4 connecting the master cylinder 1 to the wheel brake 3; a solenoid valve 5 adapted to cut the supply of brake fluid from the fluid pressure source to the wheel brake 3 while the brake pressure is being reduced during antilock control mode; a solenoid valve 6 for opening fluid communication between the wheel brake 3 and a discharge passage 7 while the brake pressure is being reduced during antilock control; a low-pressure reservoir 8 (buffer chamber) for temporarily storing the brake fluid discharged from the wheel brake; a flow restriction valve 9; and a pump 10 which serves as a fluid pressure source for reincreasing the brake pressure during antilock control.

The pump 10 is a plunger pump including an intake valve 11, a discharge valve 12, a plunger 13, an eccentric drive shaft 14 for urging the plunger 13 in such a direction as to compress the brake fluid, and a return spring 15 biasing the plunger 13 in the opposite direction. This pump 10 serves to suck up brake fluid in the discharge passage 7 and return it into the main fluid line 4.

The flow restriction valve 9 is provided in the main fluid line 4 at a point upstream of a point 16 at which a line leading from the discharge port of the pump 10 joins the main fluid line 4. It includes a check valve 17 which is adapted to allow fluid flow from the master cylinder 1 toward the wheel brake 3 and check the fluid flow in the opposite direction, and a piston 18 adapted to push the valve body of the check valve 17 into its open position during normal braking to allow fluid flow in both directions.

The pump discharge pressure is acting on the right end of the piston 18 while the wheel brake pressure is acting on its left end. Thus, when the pump discharge pressure becomes higher than the wheel brake pressure by a predetermined value, the piston 18 begins to move leftwardly overcoming the biasing force of the spring until the valve body of the check valve 17 sits on the valve seat. Thus, the fluid flow from the pump 10 toward the master cylinder 1 is shut off by the check valve 17. Another check valve 19 is provided in the piston 18. It allows only fluid flow from the wheel brake 3 toward the master cylinder 1. It serves to return brake fluid from the wheel brake into the master cylinder 1 if the driver changes his mind and the brake pedal is released or relaxed during antilock control.

Numeral 20 indicates a piston as a pressure comparison/pump discharge stopping means. The discharge pressure of the pump 10 acts on its righthand end and the output pressure of the master cylinder 1 and the biasing force of a spring 21 acts on its lefthand end. While the brake is not applied or during normal braking, at which time the check valve 17 is kept open, the fluid pressures that act on both ends of the piston 20 are equal, so that the piston 20 is urged to the illustrated position by the biasing force of the spring 21. In this state, a valve body 12a of the discharge valve 12 is freely movable into contact with and away from a fixed valve seat 12b. That is, the pump 10 operates normally.

When the antilock control begins, the check valve 17 is closed due to the difference between the pump discharge pressure and the wheel brake pressure. Thus, there appears a difference between pump discharge pressure that acts on the righthand end of the piston 20 and the master cylinder pressure that acts on the lefthand end of the piston 20. When the piston driving force due to this pressure difference overcomes the force of the spring 21, the piston 20 begins to move leftwardly. While moving leftwardly, the piston 20 engages the valve body 12a of the discharge valve 12, moving it leftwardly together with the piston 20. The valve 12 is thus opened. In this state, the brake pressure in the pump 10 is not compressed, so that no brake fluid is discharged from the pump. Since the pump is running idle in this state, its driving motor is free of load.

While the check valve 17 is closed, fluid flow from the pump 10 toward the master cylinder 1 is shut off, so that no pump pulsation is transmitted to the brake pedal 2. Even though the pump stops discharge temporarily, this will not affect the antilock control at all, because when the fluid pressure begins to increase again during antilock control so that the pressure in the pump discharge circuit decreases below a predetermined value, the piston 20 will return to the original position, allowing the pump to discharge fluid again.

In this embodiment, as the piston 20 moves, the volume of a chamber 22 decreases. This will cause a slight kickback of the brake pedal. But such a kickback is considered an advantage rather than a disadvantage. If no such kickback occur at all, the driver cannot know whether the antilock control is being carried out. If slight kickbacks occur during antilock control, the driver can feel through his foot on the brake pedal that the antilock control is now under way.

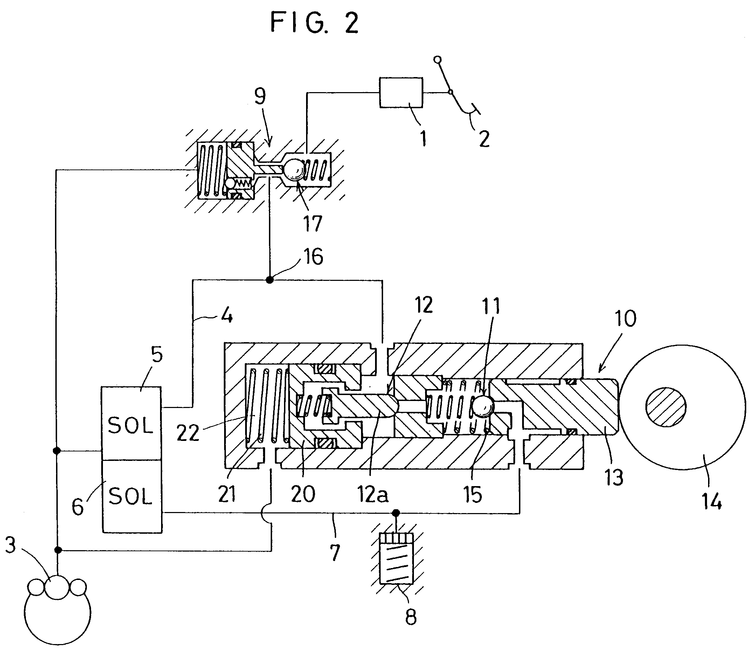

But if it is desired to completely eliminate such kickbacks, this can be achieved by connecting the chamber 22 to the wheel brake 3 as shown in Fig. 2. In this case, the wheel brake pressure is used as a comparison pressure for controlling the piston 20.

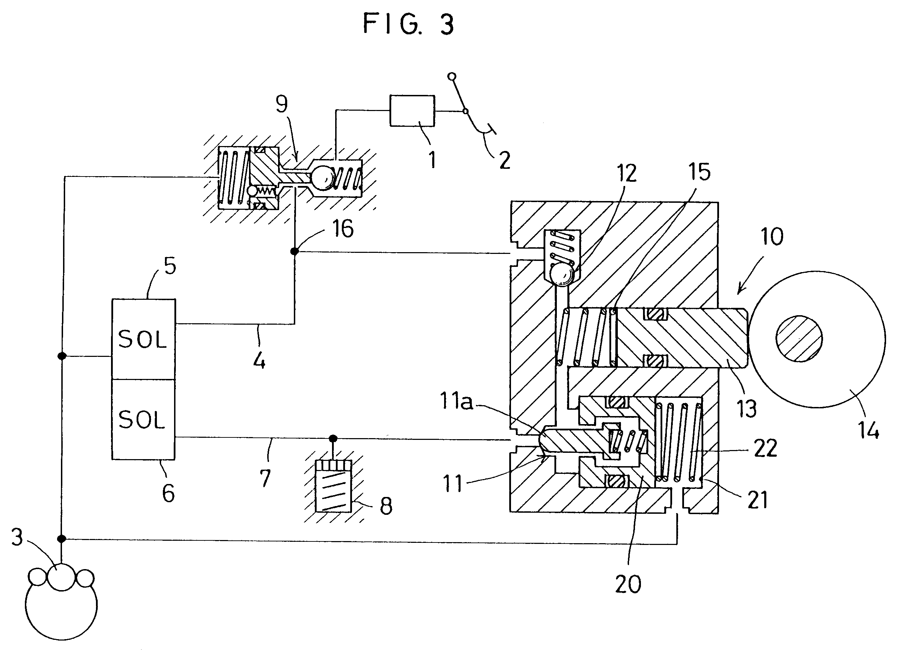

In the embodiment shown in Fig. 3, the valve body 11a of the intake valve 11 is adapted to be held in the open position by the difference between the fluid pressures that act on both ends of the piston 20. Its operation and effect are the same as in the other embodiments. In this embodiment, too, the master cylinder pressure may be applied to the righthand end of the piston 20, instead of the wheel brake pressure.

Means for restricting the fluid flow from the pump toward the master cylinder may be a solenoid valve activated by an antilock control starting signal. But the flow restriction valve in the embodiments is more advantageous because it requires no electromagnetic actuating means and is less likely to fail. In any of the embodiments, a throttling circuit may be provided between the pump 10 and the master cylinder 1 in parallel to the check valve 17 to allow slight fluid flow from the pump toward the master cylinder. In this case, even if the wheel brake pressure is used as the comparison pressure, it is possible to let the driver know through the brake pedal that the antilock control is under way.

The flow restriction valve may be of the type including a piston adapted to move when the master cylinder pressure reaches a predetermined value, such as the abovementioned F-valve. But this type of valve has a problem in that the piston is moved every time the normal braking mode begins, thereby increasing the consumption of brake fluid. In contrast, the piston 18 of the illustrated flow restriction valve 9 never moves during normal braking and thus the consumption of brake fluid never increases.

Discharge from the pump may be stopped by detecting the difference between the pump discharge pressure and the comparison pressure and electromagnetically pulling the valve body of the intake valve or the discharge valve to an open position and holding it in this position. But the illustrated piston 20 is more advantageous for simpler structure, lower cost and higher reliability.

As has been described above, according to the present invention, when brake fluid need not be supplied from the pump, or if excessive brake fluid is discharged from the pump, the pump is automatically disabled so that it cannot discharge brake fluid. Thus, there is no need to provide an extra circuit protection means such as a pressure accumulator, a relief valve or a regulator valve for unloading brake fluid. The entire device is thus simple in structure, smaller in size, and less expensive. The devices of the embodiments are especially preferable, because in this arrangement, the above function is carried out by providing a single piston in the pump housing. Such devices are especially simple in structure, small in size and low in manufacturing cost. Because of simple structure, such devices are less likely to fail.

## Claims

1. An antilock modulator for use in an antilock system, comprising a pump having an intake valve and a discharge valve for sucking up brake fluid discharged from a wheel brake during antilock control, and returning the brake fluid into a main fluid line connecting a master cylinder to said wheel brake,
a flow restriction means for restricting fluid flow from said pump toward said master cylinder at least during antilock control,
a pressure comparison means for comparing the output pressure of said master cylinder or the pressure of said wheel brake as a comparison pressure with the discharge pressure of said pump, said pressure comparison means being adapted to be activated if said pump discharge pressure becomes higher by a predetermined value than said comparison pressure, and
a pump discharge stop means for stopping said pump from discharging fluid by moving one of valve bodies of said intake valve and said discharge valve to an open position and holding it therein when said pressure comparison means is activated.

2. An antilock modulator as claimed in claim 1 wherein a single piston is provided to serve as both said pressure comparison means and said pump discharge stop means, said piston being biased by a biasing means and acted on by said pump discharge pressure and said comparison pressure from opposite directions, said piston being adapted to move from a rest position in a direction against the biasing force of said biasing means when said pump discharge pressure becomes higher by said predetermined value than said comparison pressure, until said piston engages one of the valve bodies of said intake valve and said discharge valve, thereby holding said one of said valve bodies in said open position.
